# EUROPÄISCHE PATENTSCHRIFT

(11) **EP 1 968 893 B1**
(45) Veröffentlichungstag und Bekanntmachung des Hinweises auf die Patenterteilung: **20.07.2011**
(21) Anmeldenummer: 06829376.0
(22) Anmeldetag: 07.12.2006
(51) Int. Cl.: C01B 35/04, C22C 29/14, C23C 24/00

(54) **METALLBORIDE**
METAL BORIDES
BORURE METALLIQUE

(30) Priorität: 20.12.2005 DE 102005061279; 05.01.2006 US 756504 P
(43) Veröffentlichungstag der Anmeldung: 17.09.2008
(73) Patentinhaber: H.C. Starck GmbH, 38642 Goslar (DE)
(72) Erfinder: SCHRUMPF, Frank, 38642 Goslar (DE); KILIANI, Wolfgang, 79725 Laufenburg (DE); FRÄSSLE, Stefan, 79730 Murg (DE); SCHMIDT, Thomas, 38685 Langelsheim (DE)
(86) Internationale Anmeldenummer: PCT/EP2006/011753
(87) Internationale Veröffentlichungsnummer: WO 2007/071327

(56) Entgegenhaltungen:
- WO-A2-2004/104242
- GB-A- 761 311
- US-A- 2 906 605
- US-A- 2 957 754
- US-A- 5 087 592
- D. D. RADEV: "Properties of Titanium and Zirconium Diborides Obtained by Conventional and Nonconventional Synthesis Methods" METALL, Bd. 50, September 1996 (1996-09), Seiten 561-564, XP009079993 Metall-Verlag GmbH, Berlin, Germany
- HONG ZHAO, YU HE, ZONGZHE JIN: "Preparation of Zirconium Boride Powder" JOURNAL OF THE AMERICAN CERAMIC SOCIETY, Bd. 78, Nr. 9, September 1995 (1995-09), Seiten 2534-2536, XP002423104 American Ceramic Society, Columbus, OH, US

## Beschreibung

Die vorliegende Erfindung betrifft Boride von Metallen der vierten Nebengruppe mit einem hohen Anteil einkristalliner, grober Pulverpartikel mit einem Volumen von >1,5*10⁻³ mm³ wobei die Flächen der Partikel glatt und glänzend und die Ecken und Kanten der Partikel abgerundet sind.

Keramische Materialien werden seit langer Zeit verwendet, um verschleißfeste Maschinen- oder Apparateteile zu fertigen. Die im Vergleich zu metallischen Werkstoffen hohen Härten und Festigkeiten vieler Keramiken erlauben die Handhabung abrasiver Substanzen ohne schnellen Verschleiß der Apparate. Rohre oder Rohrbögen, Rührwerke, Rührbehälter, Strömungsbrecher, Düsen, Kugeln in Ventilen, Stanz-, Fräs- oder Schneidwerkzeuge, Sichterräder oder Prallplatten in Mühlen werden oft ganz aus Keramik gefertigt oder mit keramischen Fliesen beklebt, um die Standzeiten der jeweiligen Teile zu verlängern.

Für die physikalischen Eigenschaften des zu fertigenden Bau- oder Beschichtungsteils sind neben der chemischen Zusammensetzung des keramischen Materials auch die Beschaffenheit der röntgenographischen Phasen und der Form der Kristalle relevant. Die Härte und Festigkeit eines Werkstoffs wird wesentlich davon bestimmt, welche Möglichkeiten ein entstehender Riss hat, in die Partikel einzudringen und sich fortzupflanzen.

Eine Methode, die Rissfortpflanzung zu unterdrücken ist die Herstellung des keramischen Bauteils aus einer großen Zahl extrem feiner Kristalle. Dadurch kann sich ein auftretender Riss nur über eine sehr kurze Strecke fortsetzen, bevor er an eine Phasengrenze stößt und damit in der Fortpflanzung behindert wird. Dies wird zum Beispiel in der Hartmetallindustrie durchgeführt, wo besonders hohe Härten und Festigkeiten mit sehr feinem Wolframcarbid mit Partikelgrößen unter 1 µm, insbesondere unter 0,5 µm mit Cobalt als Binder erreicht werden.

Eine andere Vorgehensweise ist die Verwendung einkristalliner Materialien. Durch die im geordneten Kristall vorliegenden extrem hohen Anziehungskräfte der elektrisch gegensätzlich geladenen Kationen und Anionen stellt ein derartiger Kristall - wenn Fehlordnungen im Gitter weitestgehend vermieden werden - die optimale, maximal erreichbare Hartphase der jeweiligen chemischen Zusammensetzung dar. Diese Strategie ist auch aus der Metallurgie bekannt. Beispielsweise werden Turbinenschaufeln für heiße Bereiche von Gasturbinen im Gussverfahren als einkristalline Bauteile aus Superlegierungen gefertigt.

Die Herstellung von einkristallinen Partikeln durch Kristallwachstum hat ausserdem den Vorteil, dass beim kontrollierten Wachstum üblicherweise glatte Oberflächen gebildet werden, die bei geeigneter Prozessführung weitgehend fehlerfrei sind. Im Vergleich zu polykristallin-agglomerierten Partikeln oder gegenüber Gläsern zeigen derartige Kristalle homogenere Oberflächenstrukturen. Durch die glattere Oberfläche der gewachsenen Kristalle wird die Anzahl der oberflächlichen Versetzungen oder anderer Fehlstellen minimiert, die als Startpunkte von Rissen dienen können. Unter "einkristallin" im Sinne der vorliegenden Patentschrift wird nicht die in der kristallografisch/mineralogischen Fachwelt gebräuchlichen Eigenschaften eines "Einkristalls" wie "frei von Versetzungen" oder "unverzwillingt" verstanden. Der hier verwendete Begriff "einkristallin" soll vereinfacht als Unterscheidung zu "aus kleinen Kristallen agglomeriert" oder "aus einem großen Schmeizeblock durch Brechen und Mahlen gewonnen" Partikeln dienen. Der Begriff "einkristallin" ist somit als Vereinfachung zu verstehen für die Beschreibung: "Partikel, die beginnend bei Kristalikeimen in der Reaktionszone durch Anlagerung von Material auf atomarer Ebene Schicht für Schicht wachsen und dabei die spezifische Oberfläche und dadurch die Oberflächenenergie verringern."
Polykristallin agglomerierte oder glasartige Partikel werden in der Regel erhalten, wenn keramische Schmelzen abgekühlt werden und die erhaltenen großvolumigen Brocken durch Brechen, Mahlen und Sieben zu Pulver verarbeitet werden. Solche Pulver sind an den scharfen Ecken und Kanten der Partikel erkennbar. Von Nachteil sind hierbei diese scharfen Ecken und Kanten, da sie Orte hoher Oberflächenenergie darstellen, was ebenfalls zu erleichtertem Abbrechen und Rissentstehung führt.

Eine Kombination der Vorteile beider oben genannten Strategien gibt es beim keramischen Hartstoff "Wolframschmelzcarbid" , W₂C/WC. Dieses Material lässt sich in einer feinkristallinen Modifikation verwenden, welche durch die federartig verteilten feinen Kristalle eine hohe Härte aufweist. Diese Struktur wird beim Erstarren aus der Schmelze gewonnen. Von Nachteil sind hierbei die scharfen Ecken und Kanten die nach Mahlen und Sieben auftreten. Besonders hohe Verschleißbeständigkeit erreicht man mit diesem Material wenn die Partikel zusätzlich eine kugelige äußere Form haben. Dies wird beim sphärischen Wolframschmelzcarbid durch erneutes sehr kurzzeitiges Anschmelzen erreicht. Die Kugelform erschwert das Entstehen oder Eindringen eines durch Druck oder Spannung induzierten Risses in die Partikel.

Ebenfalls bekannt sind keramische Verschleißschutzbeschichtungen aus dem Werkstoff Titanborid, TiB₂. TiB₂ ist ein keramisches Material, welches fast die Härte des Diamanten erreicht, eine Schmelztemperatur von etwa 2900°C aufweist und elektrisch leitfähig und chemisch äußerst widerstandsfähig ist. Aufgrund seiner elektrischen Leitfähigkeit können Sinterteile aus TiB₂ mit elektroabrasiven Verfahren zu komplizierten Bauteilen verarbeitet werden. Die chemische Reaktionspassivität ermöglicht die Handhabung von geschmolzenen Metallen, wie Kupfer, Aluminium oder Zink in Apparaten aus TiB₂.

TiB₂ ist geeignet als leitfähige Komponente in Mischkeramiken gemeinsam mit Bornitrid, um beispielsweise Verdampferschalen für die Aluminiumschmelze herzustellen. Die hohe Korrosionsbeständigkeit in Verbindung mit der elektrischen Leitfähigkeit wird bei dieser Anwendung vorteilhaft genutzt.

Bekannt ist weiter die Verwendung von TiB₂ als Bestandteil besonders widerstandfähiger Bauteile aus Keramiken oder Cermets. In der Regel kommen hier Pulver zum Einsatz, die sehr fein sind und mittlere Partikelgrößen D₅₀ von wenigen Mikrometern, teilweise sogar im Nanometerbereich, aufweisen.
Grobe TiB₂-Körnungen können für Elektrodenbeschichtungen oder als Ersatz für die Kohleelektrode bei der Aluminium-Elektrolyse eingesetzt werden, da TiB₂ durch flüssiges Aluminium benetzt wird und der elektrische Widerstand der Zelle reduziert werden kann. Diesen Einsatz beschreibt das Europäische Patent EP-A-0232223. Die Darstellung von TiB₂-haltigen Kompositen für die Verwendung in Aluminium-Elektrolysezellen sind z.B. beschrieben in EP-A-0115702, EP-A-0308014 und WO 97/08114.

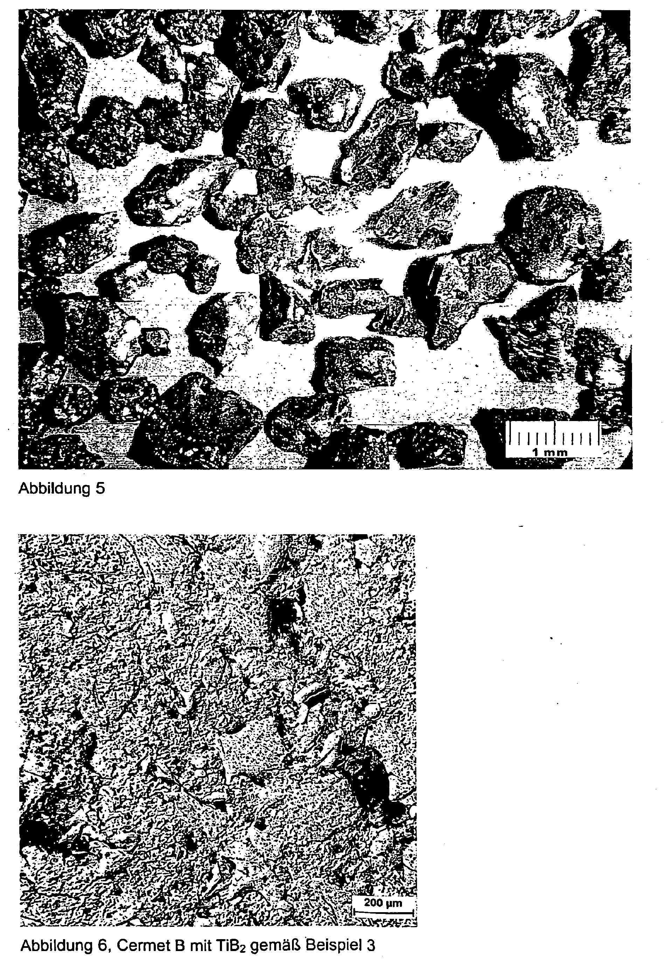

Titanborid-Pulver welches durch Brechen, Mahlen und Sieben geschmolzenen Titanborids hergestellt wurde ist kommerziell erhältlich. Die Partikel haben eine Größe von etwa 150 µm bis über 1 mm. Man kann auf mikroskopischen Aufnahmen deutlich die muschelig gebrochene Oberflächenstruktur und die glasartigen, scharfen Ecken und Kanten der Partikel erkennen (Abbildung 5). Die raue Oberfläche erhöht aus den oben beschriebenen Gründen die Verschleißanfälligkeit der Keramik.

US-B-5087592 beschreibt ein Verfahren bei dem unter Zusatz von Alkalicarbonat aus TiO₂ Kohle und B₂O₃ bei Temperaturen von 1600-1700°C ein plättchenförmiges TiB₂ hergestellt werden kann. Das Produkt besteht aus hexagonalen Plättchen mit Durchmesser 5-30 µm. Die Plättchen sind teilweise zu größeren Agglomeraten zusammengesintert. Diese Agglomerate sind jedoch relativ weich und zerfallen erwartungsgemäß relativ leicht, z.B. beim Mahlen in einer Strahlmühle. Partikel mit Größen über 80 µm sind in der Pulvermischung fast nicht vorhanden.

Ähnliches gilt für die übrigen Boride der Metalle der vierten Nebengruppe (IV b) des Periodensystems der Elemente, also Titan, Zirkonium und Hafnium.

Es war die Aufgabe der Erfindung, Boride der Metalle der vierten Nebengruppe (IV b) des Periodensystems der Elemente bereitzustellen, welche als grobkristallines Pulver mit glatten Obeflächen und abgerundeten Kanten vorliegt.
Die Herstellung einer Verschleißschutzkeramik auf dieser Basis würde hierdurch einen wesentlichen qualitativen Fortschritt erzielen.

Bisher sind jedoch keine Verfahren bekannt, mit denen derartige Boride als gewachsene, kristalline Pulver mit glatten Oberflächen und abgerundeten Kanten in technischem Maßstab erzeugt werden können. Insbesondere sind keine Verfahren bekannt, mit denen industriell und wirtschaftlich grobe TiB₂-Einkristalle mit Kantenlängen deutlich über 200 µm produziert werden können.
Es war daher eine weitere Aufgabe der Erfindung ein Verfahren zur Herstellung derartiger Materialien bereitzustellen.

Die Aufgaben der vorliegenden Erfindung wurden gelöst durch die Bereitstellung von Boriden von Metallen der vierten Nebengruppe des Periodensystems, wobei mindestens 55 Gew.-% der Partikel eine Korngröße von mehr als 106 µm aufweist, bestimmt durch Siebanalyse nach ASTM B 214 und diese Partikel aus gewachsenen, einkristallinen Körnern bestehen.

Die Boride gemäß der vorliegenden Erfindung werden erhalten nach einem Verfahren zur Herstellung eines Borides von Metallen der vierten Nebengruppe durch Umsetzung von Borcarbid mit mindestens einem Oxid eines Metalls der vierten Nebengruppe in Gegenwart von Kohlenstoff, wobei die Reaktion in Gegenwart eines Alkali- oder Erdalkalisalzes mit einem hohen Siedepunkt von mindestens 1800°C durchgeführt wird, Borcarbid im Überschuß eingesetzt wird, und die Reaktion bei einer Temperatur von mehr als 2000°C durchgeführt wird.
Die Aufgabe, bei sehr hohen Temperaturen eine Reaktionsatmosphäre zu erzeugen, die dem entstehenden Borid eines Metalls der vierten Nebengruppe des Periodensystems (insbesondere TiB₂) die Möglichkeit eröffnet durch Ostwaldreifung grobe Kristalle zu bilden wurde gelöst, indem die Temperatur der Reaktionsmischung nahe an den Schmelzpunkt des Borides eines Metalls der vierten Nebengruppe des Periodensystems herangeführt wurde.
Erst bei ausreichend hohen Temperaturen oberhalb von 2000°C, insbesondere 2400 °C und höher hat das Borid einen genügend hohen Dampfdruck, der es erlaubt, dass vorübergehend gebildete Kristallkeime und feine Kristalle wieder verschwinden und auf gröberen Partikeln aufwachsen. Bei dieser hohen Temperatur-kommen-B₂O₃ oder B(OH)₃ als Edukt nicht in Frage, da beide Substanzen eine zu hohe Flüchtigkeit haben und damit sehr hohe Borverluste aufträten, was nachteilig ist. Deshalb wird für das Verfahren gemäß der Erfindung Borcarbid, B₄C, eingesetzt.

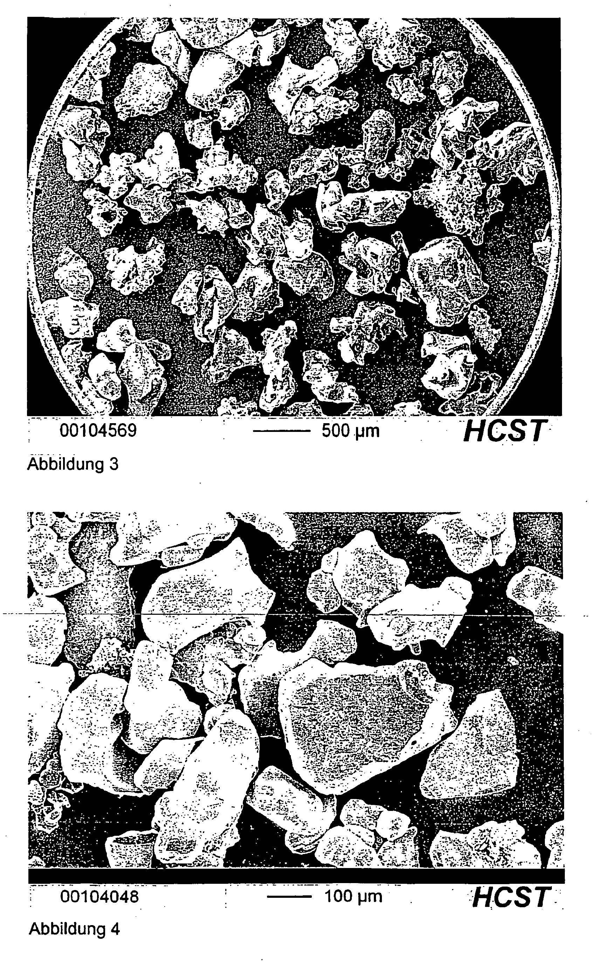

Mindestens 40 Gew.-%, vorteilhaft jedoch bis zu 100 Gew.-%, insbesondere mindestens 55 Gew.-%, oder 50 Gew.-% bis 90 Gew.-% oder 60 Gew.-% bis 70 Gew.-% der Partikel des Borids gemäß der Erfindung weisen eine Korngröße von mehr als 106 µm auf. Die Korngröße wird bestimmt durch Siebanalyse gemäß ASTM B 214. Gemäß der Erfindung müssen eben diese Partikel aus gewachsenen, einkristallinen Körnern bestehen und dürfen nicht aus Agglomeraten kleinerer Einzelkörner bestehen, die wegen ihres himbeerartigen Aussehens in der Mikroskopie auch als "Raspberries" bezeichnet werden. Der Anteil der Raspberries liegt gemäß der Erfindung vorteilhaft bei weniger als 15%, oder weniger als 10%. Diese Raspberries treten insbesondere in der Siebfraktion größer 106 µm auf und bestehen aus agglomerierten Primärkristallen einer Größe von 2 µm bis 30 µm. Vorteilhaft bestehen weniger als 10% dieser Partikel aus himbeerartig agglomerierten Primärkristallen der Größe von 2 µm bis 30 µm.
Als Metall der vierten Nebengruppe des Periodensystems der Elemente werden Titan, Zirkonium, Hafnium oder deren Mischungen verstanden. Gemäß der Erfindung können die Boride dieser Metalle, also TiB₂, ZrB₂, HfB₂, mit den beschriebenen Eigenschaften erhalten werden. Wird im Verfahren gemäß der Erfindung ein Gemisch von mindestens zwei Oxiden verschiedener Metalle eingesetzt, so lassen sich Substitutionsmischkristalle erhalten, wobei das Verhältnis der Metalle zueinander im Reaktionsgemisch die Verhältnisse im Mischkristall widerspiegelt. Die Formel des erhaltenen Borides ist dann TiₓZr_{Y}Hf_{1-X-Y}YB₂, wobei X und Y kleiner als 1 sind und die Summe aller Metalle immer 1 ergibt.
Meist ist bereits die Summe, aus X und Y gleich 1, so dass Mischkristalle lediglich aus Titan und Zirkonborid erhalten werden. Insbesondere TiB₂ und ZrB₂ gemäß der Erfindung können vorteilhaft erhalten werden. Die mittlere Korngröße der Siebanalyse gemäß ROTAP ASTM B 214 beträgt 100 µm bis 500 µm oder 200 µm bis 355 µm. Die einkristallinen Boridkörner gemäß der Erfindung können durch Mikroskopie leicht von herkömmlichen Boriden mit scharfen Kanten und muscheligem Bruch und auch von den Raspberries leicht durch ihren charakteristischen Glanz im Auflicht, glatte Oberflächen und runde Ecken und Kanten unterschieden werden. Abbildung 4 zeigt ein TiB₂ gemäß der Erfindung, Abbildung 5 zeigt ein kommerziell erhältliches TiB₂ gemäß dem Stand der Technik. Die Boride gemäß der Erfindung weisen eine Teilchengrößenverteilung auf, bei welcher der D₁₀-Wert 2 µm bis 50 µm, insbesondere 10 µm bis 35 µm oder 20 µm bis 50 µm, oder 30 µm bis 45 µm beträgt; der D₅₀-Wert beträgt 4 µm bis 300 µm, insbesondere 200 µm bis 300 µm oder 140 µm bis 240 µm; der D₉₀-Wert beträgt 8 µm bis 750 µm, insbesondere 250 µm bis 650 µm, oder 300 bis 600 µm, oder 370 µm bis 580 µm.

Das Verfahren gemäß der Erfindung wird bei einer Temperatur von etwa 2000°C oder mehr durchgeführt, vorteilhaft bei etwa 2100°C bis etwa 2750°C, insbesondere bei etwa 2200°C bis 2650°C oder bei etwa 2400°C bis etwa 2600°C oder etwa 2300°C bis etwa 2500 °C. Die Temperaturmessung erfolgt, indem mit einem Pyrometer durch die Abgasöffnung im Deckel des Tiegels die Temperatur der Oberfläche der Reaktionsmischung gemessen wird, wobei ein Emissionsfaktor von etwa 0,3 bis etwa 0,5 sinnvoll ist. Die beschriebenen Temperaturen wurden gemessen mit Pyrometer auf der Oberfläche des Reaktionsgemisches und einem Emissionsfaktor von 0,37.
Dabei muss ein Aufschmelzen des Reaktionsgemisches vermieden werden, da ansonsten bei der Erstarrung ein fester Klotz entsteht, der nur unter extremen mechanischen Kräften und nur zu splittrigen Bruchstücken mit scharfen Ecken und Kanten zertrümmert werden kann. Dieses Aufschmelzen des Reaktionsgemisches wird bei Temperaturen ab ca. 2800°C und darüber beobachtet.
Dabei wird ein Alkali- oder Erdalkalimetallsalz zugegeben, welches nicht vor oder während der Reaktion in nennenswertem Umfang verdampfen darf. Daher muss dieses Salz oder Salzgemisch einen Siedepunkt von mindestens etwa 1800°C, vorteilhaft mindestens etwa 1900°C, insbesondere 2100°C bis 2750°C oder 2200 bis 2650 °C oder 2400 bis 2600°C oder 2300 bis 2500 °C aufweisen. Vorteilhaft sind Oxide, Hydroxide oder Carbonate der Alkali- oder Erdalkalimetalle, welche einen ausreichend hohen Siedepunkt besitzen. Natriumoxid, welches in US-B-5087592 verwendet wird, ist wegen seines Siedepunktes von nur ca. 1270°C schlecht geeignet. Gut geeignet sind dagegen insbesondere Lithiumoxid (Siedepunkt >2100 °C), Magnesiumoxid (Siedepunkt > 3500 °C), Calciumoxid (Siedepunkt 2850°C), Calciumhydroxid, Calciumcarbonat.
Das Alkali- oder Erdalkalimetallsalz reagiert überwiegend zum Borat, z.B. CaBO₃ welches sich an den Korngrenzen der intermediären Phase zwischen dem Monoxid des Metalls der vierten Nebengruppe des Periodensystems und dem Borat des Metalls der vierten Nebengruppe des Periodensystems (z.B. TiO und TiBO₃ als Flüssigphase anreichert und den Gasphasentransport der Reaktionspartner unterhalb der Schmelztemperatur des Borides des Metalls der vierten Nebengruppe des Periodensystems signifikant beschleunigt. Gleichzeitig stellt sich an der Phasengrenze eine Reinigungsprozedur für das wachsende Borid des Metalls der vierten Nebengruppe ähnlich dem Zonenschmelzen dar. Dadurch wird das Kristallwachstum bei den im Verfahren gemäß der Erfindung verwendeten Temperaturen beschleunigt, so dass der Anteil von Kristallen mit einem Partikelvolumen größer als 1,5*10⁻³mm³ im ungemahlenen Reaktionsprodukt auf mehr als 50% gesteigert werden kann.

Bedingt durch den Zusatz des Alkali- oder Erdalkalimetallsalzes weisen die Boride gemäß der Erfindung einen geringen Gehalt an Alkali- oder Erdalkalimetallionen auf, welcher bei weniger als 100 ppm, vorteilhaft bei 10 ppm bis 90 ppm, insbesondere 20 ppm bis 50 ppm oder 30 ppm bis 65 ppm liegt.

Da diese Alkali- oder Erdalkalimetallsalze sich bei den Reaktionsbedingungen in der Regel zu den Oxiden der jeweiligen Alkali- oder Erdalkalimetalle umsetzen, muss der Siedepunkt der Oxide im gleichen Bereich liegen wie die oben angegebenen Bereiche für die Siedepunkte der eingesetzten Salze. Das Alkali- oder Erdalkalimetallsalz wird in Mengen von in der Regel 1 Gew.-% oder weniger, wie beispielsweise 0,025 Gew.-% bis 0,25 Gew.-% in der Reaktionsmischung zugegen sein. Bezogen auf die Verwendung von Calciumsalzen liefern Mengen von 0,03 Gew.-% bis 0,1 Gew.-%, aber auch 300 ppm bis 900 ppm Calciumgehalt gute Ergebnisse.

Die Reaktion wird außerdem in Gegenwart von Kohlenstoff durchgeführt, da der Kohlenstoffgehalt des Borcarbids nicht ausreicht um das Oxid des Metalls der vierten Nebengruppe des Periodensystems der Elemente zu reduzieren. Der Kohlenstoff kann im Allgemeinen in jeder kommerziell erhältlichen Form eingesetzt werden, welcher die notwendige Reinheit und Partikelgröße aufweist um mit den übrigen Reaktionspartnern gemischt und unter den Reaktionsbedingungen umgesetzt zu werden. Nur beispielhaft sollen hier Graphit, Ruß oder Kohlenstaub aufgeführt werden. Vorteilhaft lässt sich beispielsweise Flammenruß einsetzen, der niedrige Schwermetallgehalte von weniger als je 10 ppm aufweist, was vorteilhaft ist. Zusätzlich zu den bereits beschriebenen Reaktionspartnern können B₂O₃ oder B(OH)₃ im Reaktionsgemisch zugegen sein, um ein Anspringen der Reaktion zu erleichtern. So kann z.B. 0,4 Gew.-% bis 2,5 Gew.-%, oder 0,42 Gew.-% bis 2,46 Gew.-%, oder 0,7 Gew.-% bis 1,65 Gew.-% B₂O₃ zugegeben werden. Auch B(OH)₃ kann eingesetzt werden.
Als Oxid eines Metalles der vierten Nebengruppe des Periodensystems der Elemente kann prinzipiell jedes erhältliche Material eingesetzt werden, also alle Oxide des Titans, Zirkons oder Hafniums, insbesondere Titandioxid oder Zirkondioxid. Diese haben im Allgemeinen BET-Oberflächen von 0,1 m²/g bis 8 m²/g, insbesondere 1 m²/g bis 6 m²/g, oder 2 m²/g bis 5 m²/g oder 3 m²/g bis 4 m²/g.

Das erforderliche Verhältnis der Rohstoffe entspricht der Reaktionsgleichung:

B₄C+3C+2MO₂ →2MB2+4CO

(wobei M mindestens ein Metall der vierten Nebengruppe des Periodensystems, insbesondere Ti, Zr, oder Hf ist) nicht exakt, da intermediär flüchtige Borverbindungen entstehen, die mit dem CO-Abgas aus der Reaktionsmischung entweichen. Deshalb wird Borcarbid bezüglich der o.g. Reaktionsgleichung im Überschuss eingesetzt. Der Überschuss B₄C, der für eine Reaktion notwendig ist, die zu einer wirtschaftlichen Ausbeute an Produkt führt, beträgt im Allgemeinen 15 mol% bis 35 mol% stöchiometrisch, bezogen auf das Metall der vierten Nebengruppe des Periodensystems.
Die Reaktionszeit beträgt im Allgemeinen zwischen 4 und 36 Stunden, insbesondere 5 bis 12 Stunden, oder 14 bis 24 Stunden, oder 16 bis 22 Stunden, oder von 20 bis 26 Stunden.

Die Boride gemäß der Erfindung sind durch ihre groben, glatten Körner und die abgerundeten Kanten besonders unempfindlich gegen mechanische, abrasive oder Schlagbeanspruchung, so dass Zersplitterung oder Abbrechen von Kleinstpartikeln selten beobachtet werden. Keramiken oder Cermets, welche derartige-Boride gemäß der Erfindung enthalten, sind daher besonders verschleißbeständig und schlagzäh. Daher betrifft die vorliegende Erfindung auch die Verwendung von Boriden gemäß der Erfindung in Mischung mit einer metallischen Binderkomponente zur Herstellung von Cermets, welche durch Heißpressen, heißisostatisches Pressen oder Sinterung erhältlich sind.
Die vorliegende Erfindung betrifft weiter die Verwendung eines Borides gemäß der Erfindung zur Herstellung von Spritzpulvern zur Oberflächenbeschichtung durch Plasmaspritzen, HVOF-Spritzen oder Kaltgasspritzen, wobei das Titanborid als keramischer Hartstoff in einer metallischen Binderkomponente auf der Oberfläche eingebunden wird und durch seine besonders glatte Kristalloberfläche und seine besonders runden Ecken und Kanten besonders bevorzugte Reib- Gleit- und Verschleißeigenschaften der Beschichtung bewirkt. Die vorliegende Erfindung betrifft außerdem eine Oberflächenbeschichtung enthaltend ein Borid gemäß der Erfindung. Derartige Beschichtungen lassen sich durch thermische Spritzprozesse wie beispielsweise Plasmaspritzen, HVOF-Spritzen oder auch Kaltgasspritzen aufbringen, wofür entsprechende Spritzpulver verwendet werden. Daher betrifft die vorliegende Erfindung auch Spritzpulver enthaltend ein Borid gemäß der Erfindung und mindestens ein Metallpulver als Binderkomponente. Außerdem betrifft die vorliegende Erfindung Cermets enthaltend ein Borid gemäß der Erfindung, insbesondere enthaltend ein Titanborid oder Zirkonborid gemäß der Erfindung, insbesondere ein Titanborid. Als metallische Binder sind Binderkomponenten enthaltend Eisen, Kupfer, Chrom, Nickel, Aluminium, Yttrium, Vanadium, Rhenium oder deren Legierungen miteinander oder anderen Metallen geeignet, wie beispielsweise Stähle, wie beispielsweise Edelstahl, V4A-Stahl, V2A-Stahl, als MCrAIY bekannte Legierungen oder unter den unter den Markennamen Inconel® oder Hastalloy® vertriebenen Legierungen geeignet. Diese werden als Pulver in einem Verhältnis von 90 : 10 bis 10 : 90, oder 80 : 20 bis 20 : 80, oder 70 : 30 bis 30 : 70, oder 75 : 25 bis 25 bis 75, oder 60 : 40 bis 40 : 60, oder 50 : 50 (bezogen auf das Gewicht) miteinander gemischt, gepresst und gesintert, wodurch die Cermets gemäß der Erfindung erhalten werden.

Eine spezifischen Ausführung der Erfindung betrifft eine Verbindung der Formel Ti_{X}Zr_{Y}Hf_{1-X-Y}B₂, wobei X und Y kleiner als 1 sind und die Summe aller Metalle immer 1 ergibt, wobei 50 Gew.-% bis 100 Gew.-% der Partikel eine Korngröße von mehr als 106µm , bestimmt durch Siebanalyse nach ASTM B 214, aufweisen und diese Partikel aus gewachsenen, einkristallinen Körnern bestehen;
oder
Die Summe aus X und Y ist gleich 1;
oder
die Verbindung der Formel Ti_{X}Zr_{Y}Hf_{1-X-Y}B₂ ist Zirkoniumborid oder Titanborid; und/oder
der Anteil der Raspberries liegt gemäß der Erfindung vorteilhaft bei weniger als 15%.

Eine weitere Ausführung der Erfindung betrifft Zirkoniumborid oder Titanborid, wobei der Anteil von Kristallen mit einem Partikelvolumen größer als 1,5*10⁻³mm³ im ungemahlenen Reaktionsprodukt mehr als 50% beträgt;
und/oder
50 Gew.-% bis 100 Gew.-% der Partikel besitzen eine Korngröße von mehr als 106µm, bestimmt durch Siebanalyse nach ASTM B 214, und diese Partikel bestehen aus gewachsenen, einkristallinen Körnern;
und/oder
der Anteil der Raspberries liegt gemäß der Erfindung vorteilhaft bei weniger als 15%.

Eine weitere spezifische Ausführung der Erfindung betrifft Zirkoniumborid oder Titanborid,
der Anteil von Kristallen mit einem Partikelvolumen größer als 1,5*10⁻³mm³ im ungemahlenen Reaktionsprodukt beträgt mehr als 50%;
oder
50 Gew.-% bis 100 Gew.-% der Partikel besitzen eine Korngröße von mehr als 106 µm, bestimmt durch Siebanalyse nach ASTM B 214, und diese Partikel bestehen aus gewachsenen, einkristallinen Körnern;
und/oder die Teilchengrößenverteilung weist einen D₁₀-Wert von 20 µm bis 250 µm, D₅₀-Wert von 40 µm bis 400 µm und D₉₀-Wert von 80 µm bis 750 µm auf.

Eine weitere spezifische Ausführung der Erfindung betrifft Zirkoniumborid oder Titanborid,
der Anteil von Kristallen mit einem Partikelvolumen größer als 1,5*10⁻³mm³ im ungemahlenen Reaktionsprodukt beträgt mehr als 50%;
oder
50 Gew.-% bis 100 Gew.-% der Partikel besitzen eine Korngröße von mehr als 106 µm, bestimmt durch Siebanalyse nach ASTM B 214, und diese Partikel bestehen aus gewachsenen, einkristallinen Körnern;
und/oder
die Teilchengrößenverteilung weist einen D₁₀-Wert von 80 µm bis 200 µm, D₅₀-Wert von 100 µm bis 300 µm und D₉₀-Wert von 250µm bis 500 µm auf;
oder
die Teilchengrößenverteilung weist einen D₁₀-Wert von 120 µm bis 170 µm, D₅₀-Wert von 160 µm bis 260 µm und D₉₀-Wert von 400 bis 600 µm auf;
oder
die Teilchengrößenverteilung weist einen D₁₀-Wert von 140 µm bis 200 µm, D₅₀-Wert von 200 µm bis 280 µm und D₉₀-Wert von 370 µm bis 580 µm auf.

Eine weitere spezifische Ausführung der Erfindung betrifft Zirkoniumborid oder Titanborid,
der Anteil von Kristallen mit einem Partikelvolumen größer als 1,5*10⁻³mm³ im ungemahlenen Reaktionsprodukt beträgt mehr als 50%;
oder
50 Gew.-% bis 100 Gew.-% der Partikel besitzen eine Korngröße von mehr als 106 µm, bestimmt durch Siebanalyse nach ASTM B 214, und diese Partikel bestehen aus gewachsenen, einkristallinen Körnern;
und/oder
die Teilchengrößenverteilung weist einen D₁₀-Wert von 80 µm bis 200 µm, D₅₀-Wert von 100 µm bis 300 µm und D₉₀-Wert von 250 µm bis 500 µm auf;
oder
die Teilchengrößenverteilung weist einen D₁₀-Wert von 120 µm bis 170 µm, D₅₀-Wert von 160 µm bis 260 µm und D₉₀-Wert von 400 bis 600 µm auf;
oder
die Teilchengrößenverteilung weist einen D₁₀-Wert von 140 µm bis 200 µm, D₅₀-Wert von 200 µm bis 280 µm und D₉₀-Wert von 370 µm bis 580 µm auf.
und/oder
die mittlere Korngröße, gemessen mit Laserbeugung auf einem Microtrac X100, liegt zwischen 200 und 355µm.
Eine weitere spezifische Ausführung der Erfindung betrifft ein Verfahren zur Herstellung eines Borides von Metallen der vierten Nebengruppe durch Umsetzung von Borcarbid mit mindestens einem Oxid eines Metalls der vierten Nebengruppe in Gegenwart von Kohlenstoff, wobei die Reaktion in Gegenwart eines Alkali- oder Erdalkalisalzes mit einem hohen Siedepunkt von mindestens 1800°C durchgeführt wird, Borcarbid im Überschuß eingesetzt wird, und die Reaktion bei einer Temperatur von mehr als 2000°C durchgeführt wird,
enthaltend die Schritte
- Mischen von Borcarbid mit mindestens einem Oxid eines Metalls der vierten Nebengruppe, mit Kohlenstoff und einem Alkali- oder Erdalkalimetallsalz mit einem hohen Siedepunkt von mindestens 1800°C;
- Erwärmen der erhaltenen Mischung auf eine Temperatur von oberhalb 2000°C;
   und/oder
- Halten der Temperatur für 4 bis 36 Stunden;
oder
- Halten der Temperatur für 5 bis 16 Stunden;
oder
- Halten der Temperatur für 16 bis 26 Stunden.

Eine weitere spezifische Ausführung der Erfindung betrifft ein Verfahren zur Herstellung eines Borides von Metallen der vierten Nebengruppe enthaltend die Schritte
- Mischen von Borcarbid mit Titandioxid oder Zirkondioxid, Ruß oder Kohlestaub und Lithiumoxid, Magnesiumoxid, Calciumoxid, Calciumcarbonat oder Calciumhydroxid;
- Erwärmen der erhaltenen Mischung auf eine Temperatur von etwa 2100°C bis etwa 2750°C;
oder
- Erwärmen der erhaltenen Mischung auf eine Temperatur von etwa 2200°C bis 2650°C;
oder
- Erwärmen der erhaltenen Mischung auf eine Temperatur von etwa 2400°C bis etwa 2600°C;
und/oder
- Halten der Temperatur für 4 bis 36 Stunden;
oder
- Halten der Temperatur für 5 bis 16 Stunden;
oder
- Halten der Temperatur für 16 bis 26 Stunden.

Eine weitere spezifische Ausführung der Erfindung betrifft ein Verfahren zur Herstellung eines Borides von Metallen der vierten Nebengruppe enthaltend die Schritte
- Mischen von Borcarbid mit Titandioxid oder Zirkondioxid mit einer BET-Oberfläche von 0,1 m²/g bis 8 m²/g, Ruß oder Kohlestaub und Lithiumoxid, Magnesiumoxid, Calciumoxid, Calciumcarbonat oder Calciumhydroxid in einer Menge von weniger als einem Gew.-%;
oder
0,025 Gew.-% bis 0,25 Gew.-%;
- Erwärmen der erhaltenen Mischung auf eine Temperatur von etwa 2100°C bis etwa 2750°C;
oder
E rwärmen der erhaltenen Mischung auf eine Temperatur von etwa 2200°C bis 2650°C;
oder
- Erwärmen der erhaltenen Mischung auf eine Temperatur von etwa 2400°C bis etwa 2600°C;
und/oder
- Halten der Temperatur für 4 bis 36 Stunden;
oder
- Halten der Temperatur für 5 bis 16 Stunden;
oder
- Halten der Temperatur für 16 bis 26 Stunden.

Eine weitere spezifische Ausführung der Erfindung betrifft ein Verfahren zur Herstettung eines Borides von Metallen der vierten Nebengruppe enthaltend die Schritte
- Mischen von Borcarbid mit Titandioxid oder Zirkondioxid mit einer BET-Oberfläche von 0,1 m²/g bis 8 m²/g, mit Ruß oder Kohlestaub und 0,4 Gew.-% bis 2.5 Gew.-% B₂O₃ oder B(OH)₃ sowie Lithiumoxid, Magnesiumoxid, Calciumoxid, Calciumcarbonat oder Calciumhydroxid in einer Menge von weniger als einem Gew.-%;
oder
0,025 Gew.-% bis 0,25 Gew.-%;
- Erwärmen der erhaltenen Mischung auf eine Temperatur von etwa 2100°C bis etwa 2750°C;
oder
- Erwärmen der erhaltenen Mischung auf eine Temperatur von etwa 2200°C bis 2650°C;
oder
- Erwärmen der erhaltenen Mischung auf eine Temperatur von etwa 2400°C bis etwa 2600°C;
und/oder
- Halten der Temperatur für 4 bis 36 Stunden;
oder
- Halten der Temperatur für 5 bis 16 Stunden;
oder
- Halten der Temperatur für 16 bis 26 Stunden.

Eine weitere spezifische Ausführung der Erfindung betrifft ein Cermet erhalten aus einer Mischung enthaltend ein Zirkoniumborid oder Titanborid,
dessen Anteil von Kristallen mit einem Partikelvolumen größer als 1,5*10⁻³mm³ im ungemahlenen Reaktionsprodukt mehr als 50% beträgt;
oder
50 Gew.-% bis 100 Gew.-% der Partikel besitzen eine Korngröße von mehr als 106 µm, bestimmt durch Siebanalyse nach ASTM B 214, und diese Partikel bestehen aus gewachsenen, einkristallinen Körnern;
und
einen metallischenBinder, enthaltend Eisen, Kupfer, Chrom, Nickel, Aluminium, Yttrium, Vanadium, Rhenium oder deren Legierungen miteinander oder anderen Metallen, welcher einen D₅₀-Wert von 20 µm bis 50 µm aufweist;
oder
ein metallischer Binder enthaltend Edelstahl, V4A-Stahl, V2A-Stahl, als MCrAlY bekannte Legierungen oder unter den Markennamen Inconel® oder Hastalloy® vertriebene Legierungen, welche einen D₅₀-Wert von 20 µm bis 50 µm aufweist; und
das Verhältnis zwischen dem Zirkoniumborid oder Titanborid zum metallischen Binder im Cermet beträgt 90 : 10 bis 10 : 90.

### Beispiele:

Die Temperaturmessung erfolgt, indem mit einem Pyrometer durch die Abgasöffnung im Deckel des Tiegels die Temperatur der Oberfläche der Reaktionsmischung gemessen wird, wobei ein Emissionsfaktor von etwa 0,3 bis etwa 0,5 sinnvoll ist. Die beschriebenen Temperaturen wurden gemessen mit Pyrometer auf der Oberfläche des Reaktionsgemisches und einem Emissionsfaktor von 0,37.

### Vergleichsbeispiel 1 (Stand der Technik):

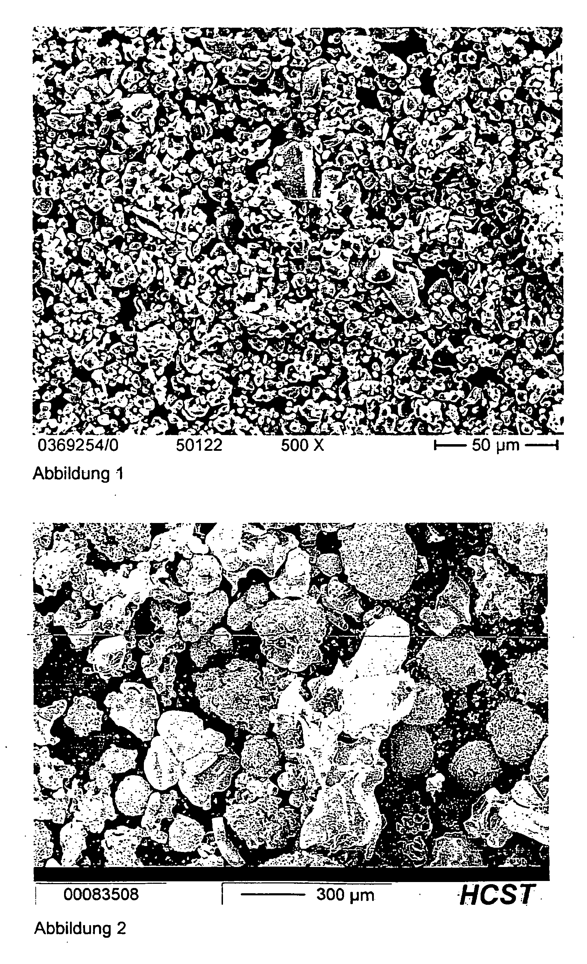

750 g TiO₂, 320 g B₄C und 120 g Ruß werden intensiv gemischt. Die Mischung wird in einem Intensivmischer homogenisiert und in einen Graphittiegel verbracht. Der Tiegel wird mit einem Graphitdeckel mit Loch verschlossen. Die Reaktion wird mit ca. 40 KW Heizleistung im Mittelfrequenzfeld auf ca. 2200°C erhitzt.
Nach 24 Stunden wird die Reaktion beendet. Der erhaltene Sinterblock wird durch Brechen, Mahlen und Sieben aufgearbeitet. Man erhält ca. 550 - 600 g TiB₂. Die Ausbeute an Körnung > 150 µm beträgt 5,8%. Alle Körner der Fraktion haben eine glatte Oberfläche sowie runde Ecken und Kanten. Allerdings liegt die mittlere Korngröße des Pulvers deutlich unter 50 µm. Abbildung 1 zeigt Körner dieses Produkts bei 500 facher Vergrößerung. Das Produkte hat die folgende Korngrößenverteilung: D₁₀: 2,0 µm; D₅₀: 4,75 µm; D₉₀: 8,88 µm.

### Vergleichsbeispiel 2 (Stand der Technik):

250 g TiO₂, 500 g H₃BO₃ und 200 g Ruß werden intensiv gemischt. Die Mischung wird in einem Mischer homogenisiert und in einen Graphittiegel verbracht. Der Tiegel wird mit einem Graphitdeckel mit Loch verschlossen. Die Reaktion wird mit 35 - 40 KW Heizleistung im Mittelfrequenzfeld auf ca. 2200°C erhitzt.
Nach 16-20 Stunden wird die Reaktion beendet. Der erhaltene Sinterblock wird durch Brechen, Mahlen und Sieben aufgearbeitet. Man erhält ca. 218 g TiB₂. Die Ausbeute ist beim B₂O₃-Weg in einem MF-Ofen deutlich niedriger und damit die spezifischen Kosten höher, als beim B₄C-Verfahren. Es entsteht ein feines Produkt dessen Kristalle ca. 1 bis 5 µm groß sind.

### Beispiel 1:

750 g TiO₂, 320 g B₄C und 220 g Ruß werden intensiv gemischt. Die Mischung wird in einem Mischer homogenisiert und in einen Graphittiegel verbracht. Der Tiegel wird mit einem Graphitdeckel mit Loch verschlossen. Die Reaktion wird mit der erhöhten Heizleistung von 45 - 50 KW im Mittelfrequenzfeld auf ca. 2400-2500°C (gemessen mit Pyrometer durch die Öffnung im Deckel) erhitzt.

Nach 18-22 Stunden wird die Reaktion beendet. Der erhaltene Sinterblock wird durch Brechen, Mahlen und Sieben aufgearbeitet. Man erhält 550 - 600 g TiB₂. Es fällt auf, dass mehr als die Hälfte der groben Partikel aus himbeerartig agglomerierten Primärkörnern besteht. Die Größe der feinen Primärkörner liegt im Bereich von ca. 2 -30 µm. Die gewachsenen einkristallinen Körner der Grobfraktion zeigen glatte Oberflächen und abgerundete Ecken und Kanten. Abbildung 2 zeigt Körner und Raspberries dieses Produkts bei 20 facher Vergrößerung. Das Produkt hat die folgende Korngrößenverteilung: 53,8% Gew. < 106µm; 33,8% Gew. 106-250 µm, 12,4% Gew. > 250 µm.

### Beispiel 2:

750 g TiO₂, 320 g B₄C und 220 g Ruß und 1 g CaO werden intensiv gemischt. Die Mischung wird in einem Mischer homogenisiert und in einen Graphittiegel verbracht. Der Tiegel wird mit einem Graphitdeckel mit Loch verschlossen. Die Reaktion wird mit-der erhöhten Heizleistung von ca. 50 KW im Mittelfrequenzfeld auf ca. 2400 - 2500°C (gemessen mit Pyrometer durch die Öffnung im Deckel) erhitzt.

Nach 21 - 24 Stunden wird die Reaktion beendet. Der erhaltene Sinterblock wird durch Brechen, Mahlen und Sieben aufgearbeitet. Man erhält ca. 550 - 600 g TiB₂. Die Ausbeute an Körnung > 106 µm beträgt 84,6%. Der Calciumgehalt des Produktes betrug 38 ppm. Die Ausbeute der Körnung 106 - 800 µm an der Gesamtmasse beträgt 73,4%. Es fällt auf, dass fast keine der groben Partikel aus himbeerartig agglomerierten feinen Primärkörnern besteht sondern, dass fast alle einkristalline Körner mit glatten Oberflächen und abgerundeten Ecken und Kanten sind. Körner der Fraktion 200- 800 µm sind in Abbildung 3 dargestellt. Das Produkt hat die folgende Korngrößenverteilung: 13,4% Gew. < 106µm; 30,2% Gew. 106-250µm; 56,4% Gew. > 250 µm.

### Beispiel 3:

750 g TiO₂, 320 g B₄C und 220 g Ruß und 0,5 g CaO werden intensiv gemischt. Die Mischung wird in einem Mischer homogenisiert und in einen Graphittiegel verbracht. Der Tiegel wird mit einem Graphitdeckel mit Loch verschlossen. Die Reaktion wird mit der erhöhten Heizleistung von ca. 50 KW im Mittelfrequenzfeld auf ca. 2400 - 2500°C (gemessen mit Pyrometer durch die Öffnung im Deckel) erhitzt.

Nach 16-21 Stunden wird die Reaktion beendet. Der erhaltene Sinterblock wird durch Brechen, Mahlen und Sieben aufgearbeitet. Man erhält ca. 560 - 600 g TiB₂. Die Ausbeute an Körnung > 250 µm beträgt 52,4%. Die Ausbeute der Körnung 106-800 µm an der Gesamtmasse beträgt 67,8%. Es fällt auf, dass fast keine der groben Partikel aus himbeerartig agglomerierten Primärkörnern besteht sondern, dass fast alle einkristallinen Körner mit glatten Oberflächen und abgerundeten Ecken und Kanten sind. Körner der Fraktion 106 - 800 µm sind in Abbildung 4 dargestellt. Man erkennt sehr deutlich die glänzende, glatte Oberfläche und die runden Ecken und Kanten. Das Produkt hat die folgende Korngrößenverteilung, gemessen durch Laserbeugung mit Microtrac X100: D₁₀: 116 µm; D₅₀: 262 µm; D₉₀: 483 µm.

### Beispiel: Cermets aus Boriden von Metallen der vierten Nebengruppe und Stahlpulver

Cermetptätichen, an welchen Verschleißuntersuchungen durchgeführt werden können, werden hergestellt, indem beispielsweise grobe Boride mit metallischen Bindern gesintert werden. Es können zusätzlich feine Boridpulver zugefügt werden. Diese feinen Partikel füllen Packungslücken zwischen den groben Boridpartikeln und erhöhen somit den Gesamtgehalt an verschleißbeständigen Bestandteilen im fertigen Cermet. Cermets dieser Art werden auch in der Patentschrift WO2004/10424 beschrieben.

Die Cermets wurden aus Boriden gemäß der Erfindung hergestellt, indem 1:1:1-Mischungen aus verdüstem Edelstahl 1.4767 (Ampersint® 0559, D₅₀ = 32µm, H.C. Starck GmbH), feinem Titanborid (Grade D, Los 50559, D₅₀ = 15,3 µm, H.C. Starck GmbH) und dem in Tabelle 1 angegebenen Titanborid unter Druck gesintert wurden. Die Mischungszusammensetzungen sind unten aufgeführt. Jede der vier Mischungen wird in einer Graphitmatrize in einer Heißpresse bei 250 kp/cm² und 1250°C unter Argon zu runden Cermetscheiben mit ca. 5 mm Dicke gesintert. Tabelle 1 gibt einen Überblick über die für die Herstellung der Cermetplättchen verwendeten Pulvermischungen und die resultierenden Cermets.
Die runden Scheiben, die durch das Heißpressen erhalten wurden, werden mit einer Hochdruckwasserstrahlsäge mit dem Abrasivschneidverfahren (450 g/min. indischer Granat, 80 mesh) bei einem Druck von 3500 bar, Düsendurchmesser 0,3 mm, Vorschub 20-25 mm/min, zu rechteckigen Plättchen der Größe 50 * 25 mm² geschnitten. Es zeigte sich, dass die Plättchen des Cermets aus Beispiel 5 unter diesen Bedingungen auch mit einem reduzierten Vorschub von 15 mm/min nicht durchschneiden ließen. Dieser Cermet wurde deshalb mit einer Diamanttrennscheibe geschnitten.
Die rechteckigen Plättchen werden einem Verschleißtest auf einem Reibrollenprüfstand nach Norm ASTM G65 A unterzogen, wobei der Abrieb an den Cermetplättchen in Milligram Abrieb bestimmt wird.

Die Ergebnisse sind in Tabelle 1 aufgeführt.

| **Tabelle1** | | | |
|---|---|---|---|
| Beispiel | Titanborid | Bild des Cermets | Abrieb nach ASTM G65A [mg] |
| 4 | Beispiel 1 | | 14,4 |
| 5 | Beispiel 3 | 6 | 11,9 |
| Vergleich 3 | HCST Grade D, Los 50923, D₅₀ = 4,7µm | | 19,3 |
| Vergleich 4 | ESK, Kempten, Grade M9 | 7 | 25,9 |

Im Vergleichsbeispiel 4 wird ein handelsübliches, grobes, geschmolzenes Titanborid gemäß dem Stand der Technik verwendet (ESK, Kempten, Grade M9).

Im Vergleichsbeispiel 3 wird ein handelsübliches feines Titanborid gemäß dem Stand der Technik (H.C. Starck GmbH, Goslar, Grade D, D₅₀ = 4,7 µm) eingesetzt.

Es zeigt sich, dass der Cermet gemäß Beispiel 5 (enthaltend Titanborid gemäß Beispiel 3 der Erfindung) den geringsten Abrieb hat. Bereits beim Schneiden mit dem Wasserstrahl zeigte sich, dass der Cermet gemäß Beispiel 5 äußerst widerstandsfähig ist. Die Scheibe konnte nicht mit dem Wasserstrahl geschnitten werden. Es musste eine Diamantsäge verwendet werden.

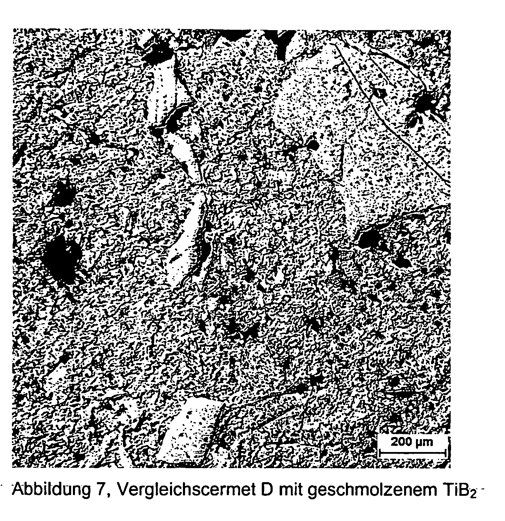

Auf den Abbildungen 6 und 7 sind die Oberflächen der heiß gepressten Cermets gemäß Beispiel 5 und Vergleichsbeispiel 4 zu sehen. Man erkennt, dass in Cermets, die mit Titanborid gemäß der Erfindung hergestellt wurden, ein besonders großer Anteil grober TiB₂-Kristalle erhalten bleibt. Obwohl in der ungesinterten Pulvermischung des Vergleichscermetplättchens gemäß Vergleichsbeispiel 4 (Abb 7) ebenfalls ein Drittel groben Titanborids enthalten war, findet man in der heiß gepressten Probe deutlich weniger dieser besonders verschleißbeständigen Partikel. Dies ist damit erklärlich, dass das geschmolzene, grobe Titanborid eine raue Oberfläche hat, die bei den erhöhten Temperaturen des Sinterprozesses besonders leicht mit Metallen reagiert. Dadurch werden die ursprünglich groben Kristalle teilweise an- oder aufgelöst und stehen nicht mehr zum Verschleißschutz zur Verfügung.
Im Gegensatz dazu bietet die äußerst glatte Oberfläche der Titanboride gemäß der Erfindung, besonders in der Ausführung wie gemäß Beispiel 3, einer aggressiven Metallmatrix während des Sinterns oder Heißpressens nur sehr wenig Angriffsfläche.

## Patentansprüche

1. Borid eines Metalls der vierten Nebengruppe des Periodensystems der Elemente, wobei mindestens 40 Gew.-% der Partikel eine Korngröße von mehr als 106µm, bestimmt durch Siebanalyse nach ASTM B 214, aufweist und diese Partikel aus gewachsenen, einkristallinen Körnern bestehen.

2. Borid nach Anspruch 1, wobei das Metall der vierten Nebengruppe des Periodensystems ein Metall ausgewählt aus der Gruppe bestehend aus Titan, Zirkonium, Hafnium und deren Mischungen ist.

3. Borid nach Anspruch 1 oder 2, welches ein Titanborid, Zirkoniumborid oder ein Mischkristall enthaltend mindestens eines dieser Boride ist.

4. Borid nach einem oder mehreren der Ansprüche 1 bis 3, wobei die mittlere Korngröße der Siebanalyse nach ASTM B214 zwischen 100 und 500 µm liegt.

5. Borid nach einem oder mehreren der vorstehenden Ansprüche, wobei die mittlere Korngöße der Siebanalyse nach ROTAP-ASTM-B214 zwischen 200 und 355 µm liegt.

6. Borid nach einem oder mehreren der vorstehenden Ansprüche, wobei die einkristallinen Körner eine glänzende, glatte Oberfläche und runde Ecken und Kanten aufweisen.

7. Borid nach einem oder mehreren der vorstehenden Ansprüche, wobei dessen Fraktion > 106µm weniger als 10% Partikel aufweist, die aus himbeerartig agglomerierten feinen Primärkristallen der Größe 2 - 30 µm bestehen.

8. Borid nach einem oder mehreren der vorstehenden Ansprüche mit einem Gehalt an Alkali- oder Erdalkalimetall von weniger als 100 ppm.

9. Verfahren zur Herstellung eines Borides von Metallen der vierten Nebengruppe durch Umsetzung von Borcarbid mit mindestens einem Oxid eines Metalls der vierten Nebengruppe in Gegenwart von Kohlenstoff, wobei die Reaktion in Gegenwart eines Alkali- oder Erdalkalisalzes mit einem hohen Siedepunkt von mindestens 1800°C durchgeführt wird, Borcarbid im Überschuß eingesetzt wird, und die Reaktion bei einer Temperatur von mehr als 2000°C durchgeführt wird.

10. Verfahren nach Anspruch 9, wobei die Temperatur 2100°C bis 2750°C beträgt.

11. Verfahren nach Anspruch 9 oder 10, wobei als Alkali- oder Erdalkalimetallsalz mindestens ein Oxid, Hydroxid oder Carbonat eingesetzt wird.

12. Verfahren nach Anspruch 11, wobei das Alkali- oder Erdalkalimetallsalz ein Salz ausgewählt aus der Gruppe bestehend aus Lithiumoxid, Magnesiumoxid, Calciumoxid, Calciumhydroxid und Calciumcarbonat eingesetzt wird.

13. Verfahren nach einem oder mehreren der vorstehenden Ansprüche, wobei die Reaktion zusätzlich in Gegenwart von B₂O₃ durchgeführt wird.

14. Verfahren nach einem oder mehreren der vorstehenden Ansprüche, wobei das Alkali- oder Erdalkalimetallsalz in einer Menge von maximal einem Gewichtsprozent des Reaktionsgemisches zugegeben wird.

15. Verfahren nach einem oder mehreren der vorstehenden Ansprüche, wobei der Calciumgehalt der Reaktionsmischung bevorzugt 0,03 bis 0,1 Gew.-% beträgt.

16. Verwendung eines Borides nach einem oder mehreren der vorstehenden Ansprüche in Mischung mit einer metallischen Binderkomponente zur Herstellung von Cermets durch Heißpressen, heißisostatisches Pressen, kaltisostatisches Pressen/Sintern oder freie Sinterung.

17. Verwendung eines Borides nach einem oder mehreren der vorstehenden Ansprüche zur Herstellung von Spritzpulvern zur Oberflächenbeschichtung durch Plasmaspritzen, HVOF oder Kaltgasspritzen, wobei das Titanborid als keramischer Hartstoff in einer metallischen Binderkomponente auf der Oberfläche eingebunden wird und durch seine besonders glatte Kristalloberfläche und seine besonders runden Ecken und Kanten besonders bevorzugte Reib- Gleit- und Verschleißeigenschaften der Beschichtung bewirkt.

18. Oberflächenbeschichtung enthaltend ein Borid nach einem oder mehreren der vorstehenden Ansprüche.

19. Cermet enthaltend ein Borid nach einem oder mehreren der Ansprüche 1 bis 8.

20. Cermet nach Anspruch 19, enthaltend als metallische Binderkomponente Eisen, Kupfer, Stahl, Edelstahl, MCrAlY, Superlegierungen, Inconel, Hastalloy, V4A-Stahl, V2A-Stahl.

21. Spritzpulver enthaltend ein Borid nach einem oder mehreren der vorstehenden Ansprüche und mindestens ein Metallpulver als Binderkomponente.

## Claims

1. Boride of a metal of transition group four of the periodic table of the elements, wherein at least 40 wt.% of the particles have a grain size of more than 106 µm, determined by sieve analysis according to ASTM B 214, and these particles consist of grown, monocrystalline grains.

2. Boride according to Claim 1, wherein the metal of transition group four of the periodic table is a metal selected from the group consisting of titanium, zirconium, hafnium and mixtures thereof.

3. Boride according to Claim 1 or 2 which is a titanium boride, zirconium boride or a mixed crystal comprising at least one of these borides.

4. Boride according to one or more of Claims 1 to 3, wherein the mean grain size of the sieve analysis according to ASTM B 214 is between 100 and 500 µm.

5. Boride according to one or more of the preceding claims, wherein the mean grain size of the sieve analysis according to ROTAP ASTM B 214 is between 200 and 355 µm.

6. Boride according to one or more of the preceding claims, wherein the monocrystalline grains have a glossy, smooth surface and round corners and edges.

7. Boride according to one or more of the preceding claims, wherein the fraction thereof > 106 µm exhibits less than 10% particles consisting of raspberry-like agglomerated fine primary crystals having a size of from 2 to 30 µm.

8. Boride according to one or more of the preceding claims having a content of alkali or alkaline earth metal of less than 100 ppm.

9. Process for the preparation of a boride of metals of transition group four by reacting boron carbide with at least one oxide of a metal of transition group four in the presence of carbon, wherein the reaction is carried out in the presence of an alkali or alkaline earth metal salt having a high boiling point of at least 1800°C, boron carbide is used in excess, and the reaction is carried out at a temperature of more than 2000°C.

10. Process according to Claim 9, wherein the temperature is from 2100°C to 2750°C.

11. Process according to Claim 9 or 10, wherein the alkali or alkaline earth metal salt used is at least one oxide, hydroxide or carbonate.

12. Process according to Claim 11, wherein the alkali or alkaline earth metal salt used is a salt selected from the group consisting of lithium oxide, magnesium oxide, calcium oxide, calcium hydroxide and calcium carbonate.

13. Process according to one or more of the preceding claims, wherein the reaction is additionally carried out in the presence of B₂O₃.

14. Process according to one or more of the preceding claims, wherein the alkali or alkaline earth metal salt is added in an amount of not more than one percent by weight of the reaction mixture.

15. Process according to one or more of the preceding claims, wherein the calcium content of the reaction mixture is preferably from 0.03 to 0.1 wt.%.

16. Use of a boride according to one or more of the preceding claims, in admixture with a metal binder component, in the manufacture of cermets by hot pressing, high-temperature isostatic pressing, low-temperature isostatic pressing/sintering or free sintering.

17. Use of a boride according to one or more of the preceding claims in the production of wettable powders for surface coating by plasma spraying, HVOF or cold gas spraying, wherein the titanium boride is bonded to the surface in the form of a ceramics hard material in a metal binder component and, owing to its particularly smooth crystal surface and its particularly round corners and edges, brings about particularly preferred frictional, sliding and wear properties of the coating.

18. Surface coating comprising a boride according to one or more of the preceding claims.

19. Cermet comprising a boride according to one or more of Claims 1 to 8.

20. Cermet according to Claim 19, comprising as metal binder component iron, copper, steel, stainless steel, MCrAlY, superalloys, Inconel, Hastalloy, V4A steel, V2A steel.

21. Wettable powder comprising a boride according to one or more of the preceding claims and at least one metal powder as binder component.

## Revendications

1. Borure d'un métal du quatrième groupe secondaire du système périodique des éléments, au moins 40% en poids des particules présentant une grosseur de particule supérieure à 106 µm, déterminée par analyse par tamisage selon la norme ASTM B 214, et ces particules étant constituées par des grains monocristallins ayant grandi.

2. Borure selon la revendication 1, le métal du quatrième groupe secondaire du système périodique étant un métal choisi dans le groupe constitué par le titane, le zirconium, le hafnium et leurs mélanges.

3. Borure selon la revendication 1 ou 2, qui est un borure de titane, de zirconium ou un cristal mixte contenant au moins un de ces borures.

4. Borure selon l'une ou plusieurs des revendications 1 à 3, la grosseur moyenne des particules de l'analyse par tamisage selon la norme ASTM B214 se situant entre 100 et 500 µm.

5. Borure selon l'une ou plusieurs des revendications précédentes, la grosseur moyenne des particules de l'analyse par tamisage selon la norme ROTAP ASTM B214 se situant entre 200 et 355 µm.

6. Borure selon l'une ou plusieurs des revendications précédentes, les grains monocristallins présentant une surface lisse brillante et des angles et des bords ronds.

7. Borure selon l'une ou plusieurs des revendications précédentes, sa fraction > 106 µm présentant moins de 10% des particules, qui sont constituées par des cristaux primaires fins agglomérés ressemblant à une framboise d'une grosseur de 2-30 µm.

8. Borure selon l'une ou plusieurs des revendications précédentes, présentant une teneur en métal alcalin ou alcalino-terreux inférieure à 100 ppm.

9. Procédé pour la préparation d'un borure de métaux du quatrième groupe secondaire par transformation de carbure de bore avec au moins un oxyde d'un métal du quatrième groupe secondaire en présence de carbone, la réaction étant réalisée en présence d'un sel de métal alcalin ou alcalino-terreux présentant un point d'ébullition élevé d'au moins 1800°C, le carbure de bore étant utilisé en excès et la réaction étant réalisée à une température de plus de 2000°C.

10. Procédé selon la revendication 9, où la température est de 2100°C à 2750°C.

11. Procédé selon la revendication 9 ou 10, où on utilise comme sel de métal alcalin ou alcalino-terreux au moins un oxyde, un hydroxyde ou un carbonate.

12. Procédé selon la revendication 11, où on utilise comme sel de métal alcalin ou alcalino-terreux un sel choisi dans le groupe constitué par l'oxyde de lithium, l'oxyde de mélange gazeux, l'oxyde de calcium, l'hydroxyde de calcium et le carbonate de calcium.

13. Procédé selon l'une ou plusieurs des revendications précédentes, la réaction étant en outre réalisée en présence de B₂O₃.

14. Procédé selon l'une ou plusieurs des revendications précédentes, où le sel de métal alcalin ou alcalino-terreux est ajouté en une quantité d'au maximum un pour cent en poids du mélange réactionnel.

15. Procédé selon l'une ou plusieurs des revendications précédentes, la teneur en calcium du mélange réactionnel étant de préférence de 0,03 à 0,1% en poids.

16. Utilisation d'un borure selon l'une ou plusieurs des revendications précédentes en mélange avec un composant liant métallique pour la préparation de cermets par pressage à chaud, pressage isostatique à chaud, pressage/frittage isostatique à froid ou frittage libre.

17. Utilisation d'un borure selon l'une ou plusieurs des revendications précédentes pour la préparation de poudres à pulvériser pour le revêtement de surface par pulvérisation au plasma, HVOF ou pulvérisation de gaz à froid, le borure de titane étant intégré à la surface sous forme de substance dure céramique dans un composant liant métallique et provoquant par sa surface cristalline particulièrement lisse et ses angles et bords particulièrement ronds des propriétés de frottement, de glissement et d'usure particulièrement préférées.

18. Revêtement de surface contenant un borure selon l'une ou plusieurs des revendications précédentes.

19. Cermet contenant un borure selon l'une ou plusieurs des revendications 1 à 8.

20. Cermet selon la revendication 19, contenant comme composant liant métallique du fer, du cuivre, de l'acier, de l'acier noble, du MCrAlY, des superalliages, de l'Inconel, de l'Hastalloy, de l'acide V4A, de l'acier V2A.

21. Poudre à pulvériser contenant un borure selon l'une ou plusieurs des revendications précédentes et au moins une poudre métallique comme composant de liant.
